# EUROPEAN PATENT APPLICATION

(11) **EP 4 644 326 A1**
(43) Date of publication of application: **05.11.2025**
(21) Application number: 24787840.8
(22) Date of filing: 05.03.2024
(51) Int. Cl.: C01F 11/22

(54) **METHOD FOR RECOVERING LARGE-PARTICLE CALCIUM FLUORIDE FROM FLUORINE-CONTAINING WASTEWATER**

(30) Priority: 11.04.2023 CN 202310385486
(71) Applicant: Zhengzhou Non-Ferrous Metals Research Institute Co. Ltd of Chalco, Shangjie District Zhengzhou, Henan 450041 (CN)
(72) Inventor: ZHANG, Yanli, Zhengzhou, Henan 450041 (CN); KANG, Zeshuang, Zhengzhou, Henan 450041 (CN); YAN, Kun, Zhengzhou, Henan 450041 (CN); FAN, Zekun, Zhengzhou, Henan 450041 (CN); LIU, Zhongkai, Zhengzhou, Henan 450041 (CN); SUN, Fengjuan, Zhengzhou, Henan 450041 (CN); TIAN, Ye, Zhengzhou, Henan 450041 (CN); HE, Xinzhong, Zhengzhou, Henan 450041 (CN); HU, Qiuyun, Zhengzhou, Henan 450041 (CN)
(74) Representative: Valet Patent Services Limited
(86) International application number: PCT/CN2024/080103
(87) International publication number: WO 2024/212734

(57) **Abstract**

A method for recovering a large-particle calcium fluoride from a fluorine-containing wastewater according to some embodiments of the invention comprises: performing an impurity removal treatment on the fluorine-containing acidic wastewater to obtain a pure fluorine-containing wastewater; activating a seed crystal containing calcium fluoride to obtain an activated seed crystal; adding the activated seed crystal into the pure fluorine-containing wastewater, and adding a calcium-containing regulator according to a preset calcium-fluorine ratio, and then adding a crystal growth promoter at a preset mass ratio to obtain a reaction solution; and adjusting a pH value of the reaction solution at a preset reaction temperature, and performing a stirring on the reaction solution, and then performing a settling, a filtering and a drying on the reaction solution to obtain the large-particle calcium fluoride, wherein the addition amount of the activated seed crystal ranges from 5 times to 10 times a concentration of fluorine ions in the pure fluorine-containing wastewater.

## Description

### CROSS-REFERENCE TO RELATED APPLICATION

This application claims priority to Chinese patent application No. 2023103854864 filed on April 11, 2023, the entire contents of which are incorporated herein by reference.

### TECHNICAL FIELD

The invention relates to the field of wastewater treatment, and in particular to a method for recovering a large-particle calcium fluoride from a fluorine-containing wastewater.

### BACKGROUND

Fluorine is one of the indispensable trace elements for the human body to maintain normal physiological activities. An appropriate amount of fluorine can promote a calcification of teeth and bones, and help a conduction of nerve excitement and a metabolism of enzymes in the human body. However, excessive fluorine has serious harm to the human body, soil, animals and plants. The World Health Organization stipulates that an upper limit for a content of fluorine in drinking water is 1.5 mg/L. A limit value for a content of fluorine ions in the "Integrated Sewage Discharge Standard" is 10 mg/L, and a limit value for a content of fluoride in the "Standards for drinking water quality" is 1 mg/L. Conventional treatment methods for a fluorine-containing wastewater, such as a chemical precipitation method and a flocculation precipitation method, will produce a large amount of sludge with high water content. Calcium fluoride in the sludge has low purity, and cannot be reused as a product. Calcium fluoride in the sludge being discharged into the environment will cause serious harm to the human body, soil, animals and plants, and also cause a waste of fluorine resources. If fluorine in the wastewater can be recovered in a form of fluoride, it can not only solve a problem of fluorine removal of the wastewater, but also realize a recovery of the fluorine resources, and is of great significance.

However, overall, the existing technologies for recovering fluorine from a fluorine-containing acidic wastewater have problems to varying degrees, such as complex process flows, difficulty in ensuring a quality of calcium fluoride recovered, and a risk of secondary pollution. Therefore, how to provide a method that can treat a high-concentration fluorine-containing acidic wastewater and recover high-quality calcium fluoride products, is a technical problem that urgently needs to be solved.

### SUMMARY

The invention provides a method for recovering a large-particle calcium fluoride from a fluorine-containing wastewater, so as to solve a technical problem in the related art that it is difficult to recover high-quality calcium fluoride products when it is intended to recover the fluorine from the fluorine-containing acidic wastewater.

A method for recovering a large-particle calcium fluoride from a fluorine-containing wastewater according to some embodiments of the invention comprises: performing an impurity removal treatment on a fluorine-containing acidic wastewater to obtain a pure fluorine-containing wastewater; activating a seed crystal containing calcium fluoride to obtain an activated seed crystal; adding the activated seed crystal to the pure fluorine-containing wastewater, and adding a calcium-containing regulator according to a preset calcium-fluorine ratio, and then adding a crystal growth promoter at a preset mass ratio to obtain a reaction solution; and adjusting a pH value of the reaction solution at a preset reaction temperature, and performing a stirring on the reaction solution, and then performing a settling, a filtering and a drying on the reaction solution to obtain the large-particle calcium fluoride, wherein an added amount of the activated seed crystal ranges from 5 to 10 times a concentration of fluorine ions in the pure fluorine-containing wastewater.

### BRIEF DESCRIPTION OF DRAWINGS

The accompanying drawings, which are incorporated in and constitute a potion of this specification, illustrate embodiments consistent with the invention and, together with the description, serve to explain the principles of the invention.

In order to more clearly illustrate the embodiments of the invention or the technical solutions in the related art, the drawings required for use in the embodiments or the description of the related art will be briefly introduced below. Obviously, for those skilled in the art, other accompanying drawings can be obtained based on these accompanying drawings without paying any creative work.
FIG. 1 is a schematic flow diagram of a method for recovering a large-particle calcium fluoride from a fluorine-containing wastewater according to some embodiments of the invention;
FIG. 2 is a detailed schematic flow diagram of the method for recovering the large-particle calcium fluoride from the fluorine-containing wastewater according to some embodiments of the invention;
FIG. 3 is a phase diagram of the large-particle calcium fluoride obtained by the method for recovering the large-particle calcium fluoride from the fluorine-containing wastewater according to some embodiments of the invention; and
FIG. 4 is a particle size distribution diagram of the large-particle calcium fluoride obtained by the method for recovering the large-particle calcium fluoride from the fluorine-containing wastewater according to some embodiments of the invention.

### DETAILED DESCRIPTION

In order to make the purpose, technical solutions and advantages of the embodiments of the invention clearer, the technical solutions in some embodiments will be clearly and completely described below in combination with the accompanying drawings in some embodiments. Obviously, the described embodiments are some embodiments of the invention, rather than all the embodiments. Based on the embodiments in the invention, all other embodiments obtained by those skilled in the art without making any creative work shall fall within the scope of protection of the invention.

Unless otherwise specified, various raw materials, reagents, instruments and apparatuses used in the invention can be purchased from the market or prepared by existing methods.

There are the following methods for recovering a calcium fluoride from a fluorine-containing acidic wastewater in the related art.
(1) As for a method for treating a high-concentration fluorine-containing wastewater and recovering a fluorine, two reaction tanks are sequentially set up; a chemical gypsum and calcium chloride are added respectively, and fluorine ions in the fluorine-containing wastewater are converted into a calcium fluoride precipitation; then a discharged wastewater is filtered through a fluorite sand filter tank to make the wastewater meet discharge standards, and a calcium fluoride is recovered at the same time. However, a calcium fluoride product obtained by this method cannot be effectively separated from a calcium sulfate, causing the quality of the calcium fluoride unstable.
(2) As for a method for producing calcium fluoride using a high-fluorine-containing industrial wastewater, a calcium hydroxide and calcium chloride are used to co-precipitate fluorine ions in a fluorine-containing wastewater. After the precipitated product passes through an inclined plate sedimentation tank, it is concentrated and filtered to obtain a mixed solid product with a calcium fluoride content of 30%-35%. The treated wastewater passes through a precision filter to ensure that an effluent meets discharge standards. The calcium fluoride obtained by this method has low purity and low utilization value.
(3) As for a method for multi-stage treatment of a high-concentration fluorine-containing wastewater and in-situ preparation of a high-purity CaF₂, a principle of this method is that: first, impurities are removed from the high-concentration fluorine-containing wastewater, specifically by adding a barium chloride to remove SO₄²⁻, adding an oxidant to remove organic matter, and adding activated carbon loaded with Fe²⁺ to remove heavy metal ions; then, the impurity-removed fluorine-containing wastewater enters a lime bed containing calcium oxide, and partial calcium sulfate in-situ crystal nucleation and CaF₂ in-situ two-step generation process are adopted to form a fluorine-containing sludge with a high content of a calcium fluoride. Although this method improves the purity of calcium fluoride in the fluorine-containing sludge, it is easy to bring about a risk of excessive heavy metals due to an addition of barium salts during a treatment process. In addition, the process flow of this method is cumbersome and operations of this method are complicated.
(4) As for a method and device for treating a fluorine-containing wastewater. A fluidized bed crystallization reactor is introduced. The principle of induced crystallization is used, being capable of recovering a calcium fluoride precipitate with large particles and low water content. However, the requirements for equipment are high, the process is complicated, and the process conditions are difficult to be controlled.
(5) As for a method for graded treatment of a fluorine-containing acidic wastewater and recovery of calcium fluoride resources, this method includes: adding calcium-containing alkaline substances (one or more of quicklime, carbide slag or lime milk) to a fluorine-containing wastewater, followed by an addition of calcium chloride, an inhibitor and a collector; removing impurities and foam in the fluorine-containing wastewater by combining the inhibitor and collector with an aeration flotation, followed by filtration and drying, to obtain particles of calcium fluoride. The inhibitor is one or two of water glass, acid water glass, and tannic acid. The collector is one or a mixture of two or more of fatty acid organic matters such as oleic acid, sodium oleate, sodium petroleum sulfonate, and sodium dodecyl sulfate. This method only relies on a flotation to remove impurities from the sludge, thus the removal effect is poor, and the recovered calcium fluoride is of poor quality, with a highest purity being 92.3%.
(6) As for a method for recycling and reusing a fluorine-containing wastewater based on an induced precipitation of calcium fluoride, it comprises: first calculating a total molar number of fluorine ions in a fluorine-containing wastewater to be treated; adding calcium chloride according to a molar ratio n (Ca ²⁺/F⁻) = 1.0, adding calcium fluoride at 5.0 g/L, and adding a coagulant aid polyacrylamide (PAM) at 30 mg/L to the fluorine-containing wastewater; stirring and settling the fluorine-containing wastewater to obtain a sludge water; then separating the sludge water. The obtained sludge portion can be returned to be reused as an induced precipitation crystal nucleus of calcium fluoride. The remaining sludge is used, by an extraction of calcium fluoride, for a preparation of fluorine-containing products for reuse. The obtained sludge has a water content of less than 50%. The content of recyclable component calcium fluoride is higher than 80%. With this method, the sludge obtained has a high moisture content and the recovered calcium fluoride has a low purity.

Therefore, overall, the existing technologies for recovering the fluorine from a fluorine-containing wastewater have problems to varying degrees, such as complex process flows, difficulty in ensuring a quality of calcium fluoride recovered, and a risk of secondary pollution.

The following crystal growth promoters in the related art are used.
(1) In a method for preparing a coarse granular aluminum hydroxide from an ammonium aluminum sulfate solution, a seed crystal growth promoter involved is one of sodium dodecyl sulfonate and sodium dodecylbenzene sulfonate or a mixture thereof. An added amount of the seed crystal growth promoter enables a volume concentration of the seed crystal growth promoter to be 400-600 ppm.
(2) In a method for efficient comprehensive utilization of arsenic alkali slag resources, a crystal growth promoter involved is citric acid. An amount of the citric acid used is measured at a concentration of 30-100 mg/L in a leaching solution containing sodium carbonate and sodium arsenate.
(3) In a crystal growth promoter for potassium sulfate and application thereof, a crystal growth promoter involved is composed of sodium tripolyphosphate, diammonium hydrogen phosphate, magnesium sulfate, urea and sodium sulfate.
(4) In a process for preparing a large-particle food-grade calcium hydrogen phosphate, a particle promoter involved includes one or two of K₂CO₃, KOH, K₃C₆H₅O₇ or K₂C₂O₄. An added amount of the particle promoter accounts for 1.5%-3.5% of a total mass of a calcium carbonate suspension and a phosphoric acid solution.
(5) In a method for improving a filtration performance of ferrous sulfate, a promoter involved is any one of ferrous sulfate heptahydrate or cellulose. An added amount of this promoter is 0.1%-5.0% by weight of a clearing titanium liquid.
(6) In a method for eliminating a periodic refinement of a particle size of a seed separation product, a trace crystal growth promoter of the aluminum hydroxide involved is a mixture of a fatty acid and a sodium dodecylbenzene sulfonate. A mass fraction of the fatty acid is 20%-60%. A mass fraction of sodium dodecylbenzene sulfonate is 40%-80%. A molecular formula of the fatty acid is CₙH₂ₙ+COOH, where n=16 or 18. An added amount of the crystal growth promoter enables a volume concentration of the crystal growth promoter to be 10-300 ppm.

In general, growths of different types of seed crystal have their own specific crystal growth promoters, but no research or reports on seed crystal growth promoters of calcium fluoride are found.

Therefore, how to provide a method that can treat a high-concentration fluorine-containing acidic wastewater and recover high-quality calcium fluoride products, is a technical problem that urgently needs to be solved.

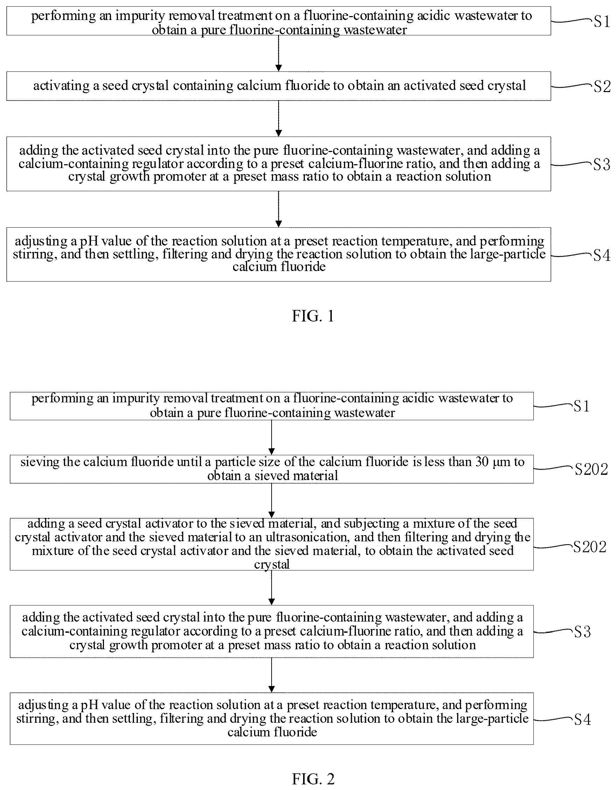

FIG. 1 is a schematic flow diagram of a method for recovering a large-particle calcium fluoride from a fluorine-containing wastewater according to some embodiments of the invention. As shown in FIG. 1, a method for recovering a large-particle calcium fluoride from a fluorine-containing wastewater according to some embodiments of the invention comprises: step S1, performing an impurity removal treatment on a fluorine-containing acidic wastewater to obtain a pure fluorine-containing wastewater; step S2, activating a seed crystal containing calcium fluoride to obtain an activated seed crystal; step S3, adding the activated seed crystal into the pure fluorine-containing wastewater, and adding a calcium-containing regulator according to a preset calcium-fluorine ratio, and then adding a crystal growth promoter at a preset mass ratio to obtain a reaction solution; and step S4, adjusting a pH value of the reaction solution at a preset reaction temperature, and performing stirring, and then settling, filtering and drying the reaction solution to obtain the large-particle calcium fluoride, wherein an added amount of the activated seed crystal ranges from 5 times to 10 times a concentration of fluorine ions in the pure fluorine-containing wastewater.

In some embodiments, a positive effect of controlling the added amount of the activated seed crystal to range from 5 times to 10 times a concentration of fluorine ions in the pure fluorine-containing wastewater is that within this range, sufficient activated seed crystal is added to effectively control a growth of calcium fluoride crystal during a reaction process, so that a homogeneous nucleation is subsequently formed to obtain the large-particle calcium fluoride.

FIG. 2 is a detailed schematic flow diagram of the method for recovering the large-particle calcium fluoride from the fluorine-containing wastewater according to some embodiments of the invention. As shown in FIG. 2, in some optional embodiments, the activating the seed crystal containing calcium fluoride, comprises:
S201, sieving the calcium fluoride until a particle size of the calcium fluoride is less than 30 µm to obtain a sieved material;
S202, adding a seed crystal activator to the sieved material, and subjecting a mixture of the seed crystal activator and the sieved material to an ultrasonication, and then filtering and drying the mixture of the seed crystal activator and the sieved material, to obtain the activated seed crystal.

In some embodiments, specific steps of activating the seed crystal containing calcium fluoride are defined as follows: first, the calcium fluoride is sieved to obtain a sieved material with a small particle size, and then a seed crystal activator is added to the sieved material, and a mixture of the seed crystal activator and the sieved material is subjected to ultrasonication, so that the seed crystal activator can fully activate the sieved material containing the calcium fluoride.

At the same time, an addition of the seed crystal activator can achieve an etching and a reset of micro-electric field of surface of the seed crystal, making the seed crystal more conducive to a continued growth and enlargement of crystal, thereby subsequently obtaining the large-particle calcium fluoride.

In some optional embodiments, a liquid-solid ratio of the seed crystal activator to the sieved material ranges from 2:1 to 5:1.

In some embodiments, the liquid-solid ratio of the seed crystal activator to the sievedmaterial being controlled to range from 2:1 to 5:1 has a positive effect that within this liquid-solid ratio range, an activation effect of the seed crystal activator on the calcium fluoride in the sieved material can be ensured, and the activated seed crystal can be obtained by cooperating with subsequent ultrasonication.

In some optional embodiments, the seed crystal activator comprises at least one of fatty alcohol polyoxyethylene ether, acetic acid, ammonium bifluoride, ammonium chloride, and sodium fluoride.

In some embodiments, a specific type of the seed crystal activator being controlled can ensure sufficient activation of the sieved material containing a calcium fluoride.

In some optional embodiments, a power of the ultrasonication ranges from 10w to 100w.

In some embodiments, a specific power of the ultrasonication being controlled can not only ensure a complete mixing of the seed crystal activator and the sieved material, but also ensure that the seed crystal activator can effectively change a micro-electric field distribution of a solution and a surface activity of a crystal growth surface, making it more conducive to a continued growth and enlargement of the crystal, thereby obtaining the large-particle calcium fluoride.

In some optional embodiments, the crystal growth promoter comprises at least one of sodium glycocholate, triglyceride, ethanol, lauryl glucoside, gluconic acid, magnesium trichloride, and copper chloride.

In some embodiments, a specific type of the crystal growth promoter being controlled can effectively change the micro-electric field distribution of a solution and the surface activity of the crystal growth surface, making it more conducive to the continued growth and enlargement of the crystal, thereby obtaining a product of the large-particle calcium fluoride.

In some optional embodiments, the calcium-containing regulator comprises calcium chloride and/or clarified lime water.

In some embodiments, a specific type of the calcium-containing regulator being controlled can not only provide a portion of calcium ions, but also preliminarily ameliorate a pH value of the pure fluorine-containing wastewater, making it easier for the crystal growth promoter in a later stage to promote a formation and growth of the crystal.

In some optional embodiments, the preset calcium-fluorine ratio ranges from 1.05 to 1.15; the preset mass ratio ranges from 0.01%0 to 0.5‰.

In some embodiments, the preset calcium-fluorine ratio is controlled to range from 1.05 to 1.15 and the preset mass ratio is controlled to range from 0.01%o to 0.5%o. Within the above ranges, a growth of the crystal can be effectively controlled and a generation of the homogeneous nucleation can be effectively avoided, thereby ensuring a uniform growth of the crystal and obtaining a product of the large-particle calcium fluoride.

In some optional embodiments, the preset reaction temperature ranges from 10°C to 30°C; and/or the pH value ranges from 6.0 to 9.0.

In some embodiments, with specific preset reaction temperature and pH value being controlled, on the one hand, a solubility and pH value of the reaction solution can be adjusted, so that a large amount of product of the calcium fluoride can be precipitated subsequently; on the other hand, by adjusting specific conditions of the reaction solution, the growth of the crystal can be controlled, effectively avoiding the generation of the heterogeneous nucleation.

In some optional embodiments, the stirring comprises a first stirring and a second stirring. A duration of the first stirring ranges from 5 min to 10 min. A duration of the second stirring ranges from 0.5 h to 1 h. A rotation speed of the first stirring is greater than a rotation speed of the second stirring.

In some embodiments, a specific manner and duration of the stirring are controlled. On the one hand, the first stirring with a faster speed can be combined with the second stirring with a slower speed to ensure a uniform dispersion of a solute in the reaction solution. On the other hand, the first stirring and the second stirring can be used to make the crystal to grow uniformly, thereby obtaining the product of the large-particle calcium fluoride.

The invention is further described below in conjunction with specific examples. It should be understood that these examples are only used to illustrate the invention but are not used to limit the scope of the invention. The experimental methods without specific conditions in the following examples are usually measured in accordance with China National standards. If there are no corresponding national standards in China, general international standards, conventional conditions, or conditions recommended by the manufacturer shall be followed.

### Example 1

An impurity removal treatment is performed on a fluorine-containing acidic wastewater with a concentration of fluorine ions of 1500 mg/L to obtain an impurity removed fluorine-containing acidic wastewater, that is, an impurity removed solution. Chemically pure calcium fluoride with a particle size of less than 30 µm is activated with a mixture of fatty alcohol polyoxyethylene ether and acetic acid, under conditions of a liquid-solid ratio of 2:1 and an ultrasonic wave with a power of 100 W. An activated calcium fluoride with an amount of 5 times a concentration of fluorine ions in the impurity removed solution is added to the impurity removed solution. A clarified lime water is added to the impurity removed solution according to a calcium-fluorine molar ratio n (Ca ²⁺/F⁻)=1.15, and a crystal growth promoter for the calcium fluoride with a mass accounting for 0.5‰ of a total mass of the impurity removed solution is added to the impurity removed solution, to obtain a reaction solution. The crystal growth promoter is composed of triglyceride, ethanol and gluconic acid.

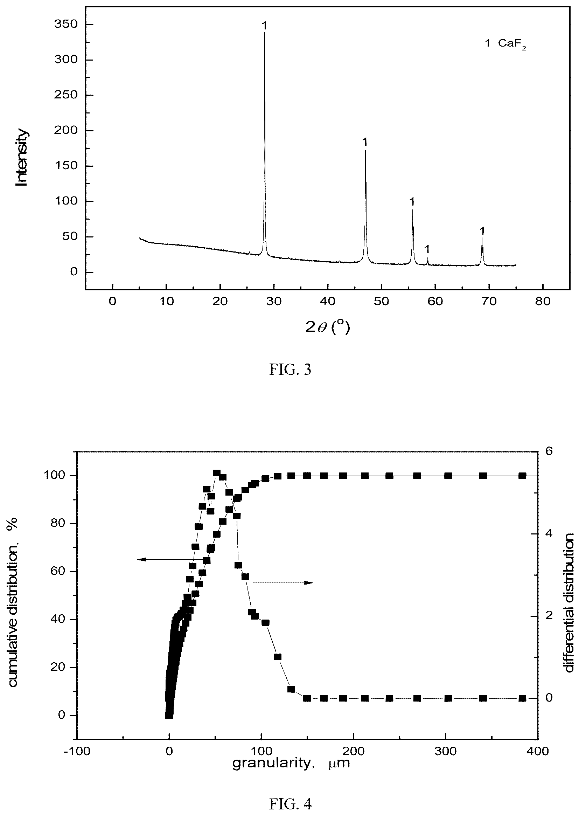

A temperature of the reaction solution is controlled as 30°C, and a pH value of the reaction solution is adjusted as 9.0. The reaction solution is first stirred rapidly for 5 minutes, then stirred slowly for 1 hour, and then fully settled and filtered to obtain a filter cake. The filter cake is dried at 105°C, then the large-particle calcium fluoride is obtained. A concentration of fluorine ions in a filtrate of the reaction solution is less than 10 mg/L, which meets discharge standards. A purity of recovered large-particle calcium fluoride reaches 98.12%. FIG. 3 is a phase diagram of the large-particle calcium fluoride in the method for recovering the large-particle calcium fluoride from the fluorine-containing wastewater according to some embodiments of the invention. FIG. 4 is a particle size distribution diagram of the large-particle calcium fluoride in the method for recovering the large-particle calcium fluoride from the fluorine-containing wastewater according to some embodiments of the invention. As shown in FIG. 4, D90=71.223 µm.

### Example 2

Example 2 is compared with Example 1, and a difference between Example 2 and Example 1 is as follows.

An impurity removal treatment is performed on a fluorine-containing acidic wastewater with a concentration of fluorine ions of 2500 mg/L to obtain an impurity removed fluorine-containing acidic wastewater, that is, an impurity removed solution. Chemically pure calcium fluoride with a particle size of less than 30 µm is activated with a mixture of ammonium chloride and sodium fluoride, under conditions of a liquid-solid ratio of 3:1 and an ultrasonic wave with a power of 10 W. An activated calcium fluoride with an amount of 10 times a concentration of fluorine ions in the impurity removed solution is added to the impurity removed solution. Calcium chloride is added to the impurity removed solution according to a calcium-fluorine molar ratio n ( Ca²⁺/F⁻)=1.05, and a crystal growth promoter for the calcium fluoride with a mass accounting for 0.01‰ of a total mass of the impurity removed solution is added to the impurity removed solution, to obtain a reaction solution. The crystal growth promoter consists of lauryl glucoside and copper chloride.

A temperature of the reaction solution is controlled as 10°C, and a pH value of the reaction solution is adjusted as 6.0. The reaction solution is first stirred rapidly for 10 minutes, then stirred slowly for 0.5 hour, and then fully settled and filtered to obtain a filter cake. The filter cake is dried at 105°C, then the large-particle calcium fluoride is obtained. A concentration of fluorine ions in a filtrate of the reaction solution is less than 10 mg/L, which meets discharge standards. The recovered large-particle calcium fluoride has a purity of 98.03%, D90=72.681 µm.

### Example 3

Example 3 is compared with Example 1, and a difference between Example 3 and Example 1 is as follows.

An impurity removal treatment is performed on a fluorine-containing wastewater with a concentration of fluorine ions of 800 mg/L to obtain an impurity removed fluorine-containing wastewater, that is, an impurity removed solution. Chemically pure calcium fluoride with a particle size of less than 30 µm is activated with a mixture of fatty alcohol polyoxyethylene ether and ammonium bifluoride, under conditions of a liquid-solid ratio of 5:1 and an ultrasonic wave with a power of 60 W. An activated calcium fluoride with an amount of 6 times a concentration of fluorine ions in the impurity removed solution is added to the impurity removed solution. Calcium chloride is added to the impurity removed solution according to a calcium-fluorine molar ratio n ( Ca²⁺/F⁻)=1.10, and a crystal growth promoter for the calcium fluoride with a mass accounting for 0.2‰ of a total mass of the impurity removed solution is added to the impurity removed solution, to obtain a reaction solution. The crystal growth promoter consists of sodium glycocholate and magnesium trichloride.

A temperature of the reaction solution is controlled as 20°C, and a pH value of the reaction solution is adjusted as 8.0. The reaction solution is first stirred rapidly for 8 minutes, then stirred slowly for 0.8 hour, and then fully settled and filtered to obtain a filter cake. The filter cake is dried at 105°C, then the large-particle calcium fluoride is obtained. A concentration of fluorine ions in a filtrate of the reaction solution is less than 10 mg/L, which meets discharge standards. The recovered large-particle calcium fluoride has a purity of 98.23%, D90=73.002 µm.

### Example 4

Example 4 is compared with Example 1, and a difference between Example 4 and Example 1 is as follows.

An impurity removal treatment is performed on a fluorine-containing wastewater with a concentration of fluorine ions of 120 mg/L to obtain an impurity removed fluorine-containing wastewater, that is, an impurity removed solution. Chemically pure calcium fluoride with a particle size of less than 30 µm is activated with a mixture of fatty alcohol polyoxyethylene ether, acetic acid and sodium fluoride, under conditions of a liquid-solid ratio of 4:1 and an ultrasonic wave with a power of 80 W. An activated calcium fluoride with an amount of 7 times a concentration of fluorine ions in the impurity removed solution is added to the impurity removed solution. Calcium chloride is added to the impurity removed solution according to a calcium-fluorine molar ratio n ( Ca²⁺/F⁻)=1.12, and a crystal growth promoter for the calcium fluoride with a mass accounting for 0.3‰ of a total mass of the impurity removed solution is added to the impurity removed solution, to obtain a reaction solution. The crystal growth promoter consists of ethanol and copper chloride.

A temperature of the reaction solution is controlled as 15°C, and a pH value of the reaction solution is adjusted as 7.0. The reaction solution is first stirred rapidly for 7 minutes, then stirred slowly for 0.6 hour, and then fully settled and filtered to obtain a filter cake. The filter cake is dried at 105°C, then the large-particle calcium fluoride is obtained. A concentration of fluorine ions in a filtrate of the reaction solution is less than 10 mg/L, which meets discharge standards. The recovered large-particle calcium fluoride has a purity of 98.15%, D90=72.452 µm.

### Example 5

Example 5 is compared with Example 1, and a difference between Example 5 and Example 1 is as follows.

An impurity removal treatment is performed on a fluorine-containing wastewater with a concentration of fluorine ions of 500 mg/L to obtain an impurity removed fluorine-containing wastewater, that is, an impurity removed solution. Chemically pure calcium fluoride with a particle size of less than 30 µm is activated with fatty alcohol polyoxyethylene ether, under conditions of a liquid-solid ratio of 4:1 and an ultrasonic wave with a power of 90 W. An activated calcium fluoride with an amount of 8 times a concentration of fluorine ions in the impurity removed solution is added to the impurity removed solution. A clarified lime water is added to the impurity removed solution according to a calcium-fluorine molar ratio n ( Ca²⁺/F⁻)=1.13, and a crystal growth promoter for the calcium fluoride with a mass accounting for 0.4‰ of a total mass of the impurity removed solution is added to the impurity removed solution, to obtain a reaction solution. The crystal growth promoter consists of sodium glycocholate, triglyceride, copper chloride and magnesium trichloride.

A temperature of the reaction solution is controlled as 25°C, and a pH value of the reaction solution is adjusted as 7.0. The reaction solution is first stirred rapidly for 9 minutes, then stirred slowly for 0.7 hour, and then fully settled and filtered to obtain a filter cake. The filter cake is dried at 105°C, then the large-particle calcium fluoride is obtained. A concentration of fluorine ions in a filtrate of the reaction solution is less than 10 mg/L, which meets discharge standards. The recovered large-particle calcium fluoride has a purity of 98.05%, D90=72.013 µm.

According to one or more technical solutions of some embodiments of the invention, at least the following technical effects or advantages are also achieved:
(1) The method for recovering the large-particle calcium fluoride from the fluorine-containing wastewater according to some embodiments of the invention can recover high-purity, large-particle calcium fluoride while making the fluorine in the wastewater to meet discharge standards. The overall process is simple, easy to operate, and there is no secondary pollution.
(2) The method for recovering the large-particle calcium fluoride from the fluorine-containing wastewater according to some embodiments of the invention can achieve an etching and a reset of micro-electric field of surfaces of the seed crystal by adding the seed crystal activator, so that the seed crystal is more conducive to the continued growth and enlargement of the crystal.
(3) The method for recovering the large-particle calcium fluoride from the fluorine-containing wastewater according to some embodiments of the invention, by adding a regulator with a reasonable calcium-fluorine ratio into a solution and with a corporation of controlling other process conditions, can effectively control the growth of the crystal, thereby effectively avoiding the generation of the heterogeneous nucleation.
(4) The method for recovering the large-particle calcium fluoride from the fluorine-containing wastewater according to some embodiments of the invention can effectively change the micro-electric field distribution of the solution and the surface activity of the crystal growth surface by adding the crystal growth promoter, making it more conducive to the continued growth and enlargement of the crystal.

The method for recovering the large-particle calcium fluoride from the fluorine-containing wastewater according to some embodiments of the invention comprises: firstly, the fluorine-containing acidic wastewater is subjected to an impurity removal treatment, and then the activated seed crystal are used to react with the impurity removed fluorine-containing acidic wastewater, and a relationship between an amount of the activated seed crystal added and the concentration of fluorine ions in the impurity removed fluorine-containing acidic wastewater is controlled; a calcium-containing regulator is added to preliminarily adjust a pH value and to provide a portion of calcium ions; the crystal in the activated seed crystal are used to generate and precipitate a portion of the calcium fluoride in the impurity removed fluorine-containing acidic wastewater; and then the crystal growth promoter is added to effectively change the micro-electric field distribution of the impurity removed fluorine-containing acidic wastewater and the surface activity of the crystal growth surface, to make it is more conducive to the continued growth and enlargement of the crystal in the activated seed crystal, thereby ensuring that the crystal in the activated seed crystal gradually grow and enough calcium fluoride can be precipitated to form the product of the large-particle calcium fluoride, so as to realize a recovery of fluorine from the fluorine-containing acidic wastewater and a recovery of a product of high-quality calcium fluoride.

Various embodiments of the invention may exist in the form of a range. It should be understood that the description in the form of a range is only for convenience and simplicity and should not be understood as a limit to the scope of the invention. Therefore, the described range should be considered to have specifically disclosed all possible subranges as well as the single values within such a range. For example, a description of a range from 1 to 6 should be considered to have disclosed subranges, such as from 1 to 3, from 1 to 4, from 1 to 5, from 2 to 4, from 2 to 6, and from 3 to 6, and a single number within the stated ranges, such as 1, 2, 3, 4, 5, and 6, which applies regardless of the range. Additionally, whenever a numerical range is indicated herein, it is intended to include any cited number (fractional or whole) within the indicated range.

In the invention, unless otherwise specified, the directional words used such as "upper" and "lower" refer specifically to the direction of the figure in the drawing. In addition, in the description of the invention, the terms "including", "comprising" and the like refer to "including but not limited to". In the invention, relationship terms such as "first" and "second" are merely used to distinguish one entity or operation from another and do not necessarily require or imply any such actual relationship or sequence between these entities or operations. In the invention, "and/or" describes the relationship between associated objects, indicating that there may be three relationships. For example, A and/or B may refer to: A alone, both A and B, and B alone. In which, A and B can be singular or plural. In the invention, "at least one" refers to one or more, and "plurality" refers to two or more than two. "At least one", "at least one of the following" or similar expressions thereof refers to any combination of these items, including single item or any combination of plural items. For example, "at least one of a, b, or c", or "at least one of a, b, and c" may represent: a, b, c, a~b (that is, a and b) , a~c, b~c, or a~b~c in which a, b, and c can each be single or multiple.

The above descriptions are only embodiments of the invention, enabling those skilled in the art to understand or implement the disclosure. Various modifications to these embodiments will be readily apparent to those skilled in the art, and the generic principle defined in the invention may be practiced in other embodiments without departing from the spirit or scope of the disclosure. Therefore, the invention is not to be limited to the embodiments shown in the invention but is to be conformed to the widest scope consistent with the principles and novel features claimed in the invention.

## Claims

1. A method for recovering a large-particle calcium fluoride from a fluorine-containing wastewater, comprising:
performing an impurity removal treatment on the fluorine-containing acidic wastewater to obtain a pure fluorine-containing wastewater;
activating a seed crystal containing a calcium fluoride to obtain an activated seed crystal;
adding the activated seed crystal into the pure fluorine-containing wastewater, adding a calcium-containing regulator according to a preset calcium-fluorine ratio, and then adding a crystal growth promoter according to a preset mass ratio to obtain a reaction solution; and
adjusting a pH value of the reaction solution at a preset reaction temperature, and performing a stirring on the reaction solution, and then settling, filtering and drying the reaction solution to obtain the large-particle calcium fluoride;
wherein an added amount of the activated seed crystal ranges from 5 times to 10 times a concentration of fluorine ions in the pure fluorine-containing wastewater.

2. The method according to claim 1, wherein the activating the seed crystal containing calcium fluoride to obtain the activated seed crystal, comprises the following steps:
sieving the calcium fluoride until a particle size of the calcium fluoride is less than 30 µm to obtain a sieved material;
adding a seed crystal activator to the sieved material, and subjecting a mixture of the seed crystal activator and the sieved material to an ultrasonication, and then filtering and drying the mixture of the seed crystal activator and the sieved material, to obtain the activated seed crystal.

3. The method according to claim 2, wherein a liquid-solid ratio of the seed crystal activator to the sieved material ranges from 2:1 to 5:1.

4. The method according to claim 2, wherein the seed crystal activator comprises at least one of a fatty alcohol polyoxyethylene ether, an acetic acid, an ammonium bifluoride, an ammonium chloride, and a sodium fluoride.

5. The method according to claim 2, wherein a power for the ultrasonication ranges from 10 W to 100 W.

6. The method according to claim 1, wherein the crystal growth promoter comprises at least one of a sodium glycocholate, a triglyceride, ethanol, a lauryl glucoside, a gluconic acid, a magnesium trichloride, and a copper chloride.

7. The method according to claim 1, wherein the calcium-containing regulator comprises a calcium chloride and/or a clarified lime water.

8. The method according to claim 1, wherein the preset calcium-fluorine ratio ranges from 1.05 to 1.15; and the preset mass ratio ranges from 0.01‰ to 0.5‰.

9. The method according to claim 1, wherein the preset reaction temperature ranges from 10°C to 30°C; and/or,
the pH value ranges from 6.0 to 9.0.

10. The method according to claim 1, wherein the stirring comprises a first stirring and a second stirring; a duration of the first stirring ranges from 5 min to 10 min; a duration of the second stirring ranges from 0.5 h to 1 h; and a rotation speed of the first stirring is greater than a rotation speed of the second stirring.
